# EUROPEAN PATENT SPECIFICATION

(11) **EP 3 732 316 B1**
(45) Date of publication and mention of the grant of the patent: **22.01.2025**
(21) Application number: 18852799.8
(22) Date of filing: 24.12.2018
(51) Int. Cl.: C25B 1/04, C25B 15/02, C25B 9/70, C25B 9/73

(54) **MODULAR DEVICE FOR THE PRODUCTION OF HYDROGEN AND OXYGEN GASES, AND PROCESS FOR THE PRODUCTION OF HYDROGEN AND OXYGEN GASES USING SUCH MODULAR DEVICE**
MODULARE VORRICHTUNG FÜR DIE HERSTELLUNG VON WASSERSTOFF- UND SAUERSTOFFGASEN, UND VERFAHREN ZUR HERSTELLUNG VON WASSERSTOFF- UND SAUERSTOFFGASEN UNTER VERWENDUNG EINER SOLCHEN MODULARVORRICHTUNG
DISPOSITIF MODULAIRE DE PRODUCTION D'HYDROGÈNE ET D'OXYGÈNE, ET PROCÉDÉ DE PRODUCTION D'HYDROGÈNE ET D'OXYGÈNE UTILISANT UN TEL DISPOSITIF MODULAIRE

(30) Priority: 29.12.2017 RS MP20171356 U
(43) Date of publication of application: 04.11.2020
(73) Proprietor: Mocevic, Vojin, 21000 Novi Sad (RS)
(72) Inventor: Mocevic, Vojin, 21000 Novi Sad (RS)
(74) Representative: Vukmir, Mladen
(86) International application number: PCT/RS2018/000020
(87) International publication number: WO 2019/132684

(56) References cited:
- US-A1- 2005 197 743
- US-A1- 2009 090 637
- DATABASE WPI Week 199622, Derwent World Patents Index; AN 1996-220520, XP002790759

## Description

The present invention relates to a modular device for producing hydrogen and oxygen gases, and a process for the production of hydrogen and oxygen gases using such modular device, see claims 1 and 6.

The object of the invention falls into, generally speaking, the field of electrical engineering, more specifically to the field of electrolysis, and in particular it relates to a modular device and a procedure for producing reproducible quality hydrogen and oxygen gases where the process of electrolysis management is based on the current [a1] of constant shape and intensity.

According to the International Patent Classification (IPC, Int. CI.⁸), the subject invention is classified and marked with the basic classification symbol C25B 1/02 defining the electrolytic production of hydrogen and oxygen, or secondary symbols C25B 1/06 referring to the electrolytic production of hydrogen or oxygen by electrolysis of water in cells with flat or plate-like electrodes, C25B 9/12 defining the electrolytic assemblies of their structural elements. Since the AC/DC or DC/DC converters are used in the invention, the invention can be characterized by another secondary classification symbol, H02M 3/156, which includes the conversion of DC power input into DC power output with automatic control of the output voltage.

### TECHNICAL PROBLEM

The technical problem solved by the invention concerned consists of the following: how to solve the construction of a modular electrolyzer which enables simple and easy series connection of cell stacks with the aim of optimizing the device capacity without affecting gas quality to achieve an efficient electrolysis process that generates hydrogen, oxygen or another product resulting from electrolysis which is further used as additive, cogeneration plant fuel, base fuel, or ICE cleaner, of optimal quality and quantity tailored to consumer needs, in order to obtain optimum utilization of the base fuel and reduce harmful exhaust gas emissions during fuel combustion, and how to manage the duration of the process of intermittent consumer additization for the purpose of decomposing the deposits caused by inefficient combustion, whereby the management procedure is based on the regulation of the shape and intensity of the electrolyzer current based on database information or through feedback from the consumer to the productivity regulator, or how to achieve a reproducible quality of the electrolyzer operation, regardless of the changing electrical conductivity, which is influenced by the level of the electrolytic solution, the number of neutral electrodes, the material of which the electrodes are made, the distance between the electrodes, the chemical composition of the solution etc. and which has an analog liquid level meter in the electrolyzer.

### BACKGROUND ART

The current state of engineering offers construction solutions for controlling the production of hydrogen and oxygen as additives for ICE, gas turbines, boilers, etc. Some electrolysis constructors do not use electrolyzer control devices at all but adapt the electrolyzer structure to the electrical voltage of the power source. Other technical solutions which are widely used are based on pulse width modulation (PWM) that is not suitable for the supply of electrolysis. In its nature, the electrolyzer is not an inductive consumer and the supply using pulsed width modulation through the electrolyzer causes non-controlled current impulses, which may lead to periodic electrolytic saturation. The average current value in this case is determined by changing the duration of the voltage impulse. In this solution, the current flowing through the electrolyzer is impulse-shaped, and the electrolyzer control is done by managing the average value of the current flowing through the electrolyzer, but the peak value of the current impulses is not fully controlled, that is, the peak value of the current impulses depends on the electrical resistance. In practice, this means the higher the peak value of the current impulse the proportionately decreased duration of the voltage impulse for the desired average value of the current.

By reviewing the existing documentation, technical solutions were found for using pulse width modulation with and without automatic control (PWM). The main disadvantage of such solutions is that they require a very limited number of electrolyzer cells which demands construction solutions consisting of the parallel connection of several sets in one electrolyzer or, where this is not possible, the electrodes surface is increased. In all these PWM-based solutions there still remains unsolved the biggest problem reflected in the unstable input voltage that directly affects the instability of the output voltage, and therefore the desired electrolytic current. For this reason, the technical solutions of PWM control with feedback were considered, but all the solutions examined were complicated and, in addition, did not provide adequate results.

By reviewing the available domestic and foreign patent documents, the following was found:
In the DE 03 21 59 246 document, a device and a process for the production of a mixture of hydrogen and oxygen in which a pressurized vessel is used to accommodate several series-connected electrolytic cells whose anodes and cathodes in the form of insulated ring-type sheet metal electrodes are separated by dividing the electrolyte to individual cells, wherein the sheet metal electrodes are at the same time the partition walls of individual electrolytic cells above which a common space for collecting produced gas is made. The disadvantage of this device is reflected in that the cells accumulate heat, so the device operates in an unstable manner and electrolyte boiling often occurs. The solution with the increase of the outer ribs is not the most appropriate, as it significantly increases the electrolyzer dimensions.

Domestic patent application P-276/93 includes an electrolytic gas production device consisting of a vessel with bipolar plate electrodes the ends of which are inserted into the grooves at the bottom of the vessel to form separated chambers whose lower zones contain the electrolyte to a certain level, while in the upper zone of each chamber there is room for gas collection. On the chamber side wall, there is a hole for the pipe used to take the gas out of the vessel. Each electrode inserted in the cover is folded in the upper part forming a cooling duct, through which the air is driven by the fan. In terms of its size, such a device is unsuitable for application; due to its dimensions, it can be difficult to fit it into modern engines designed so that they do not have free space for the installation of new devices.

The application for petty patent MP-2010/016 by applicant Ljubinković Igor from Novi Beograd, Serbia presents a device for producing mixture of hydrogen and oxygen gases for engines in motor vehicles, which includes two insulating plates between which plate electrodes are placed in parallel and at equal distances, mutually coupled by screws, designed to represent mini-chambers in which the electrolyte is poured. This device has proven to be suitable for motor vehicles with greater engine displacements, especially for trucks, but also unsuitable for use in vehicles with lower engine displacement.

US 2009/090637 A1, starting point for the present invention, describes, according to its abstract, a method for increasing the reliability of an electrolyzer cell stack includes providing multiple electrolyzer cell stacks. Each electrolyzer cell stack includes multiple cells separated by electrically conductive interconnects. The method may further include generating, using an external power source, an electrical current through each of the electrolyzer cell stacks to produce a fuel. The method may further include electrically connecting an interconnect of a first electrolyzer cell stack to an interconnect of a second electrolyzer cell stack located at a substantially equivalent electrical potential.

It is on the basis of the analysis of the above mentioned technical solutions, as well as some other relevant solutions that the author decided to construct a new modular electrolyzer, universally applicable regardless of the size and volume of consumers and the type of electrical power supply, which resolves the above defined technical problem.

### SUMMARY OF THE INVENTION

The essence of the present invention is the construction of an electrolyzer that facilitates the production of hydrogen and/or oxygen gas through a process in which the given shape and intensity of the current can be maintained and repeated, independently of the electrical conductivity of the electrolyzer, the number of cell stacks and the number of cells in a stack, whereby the produced gas is of reproducible quality and is successfully applied as an additive, base fuel, cogeneration plant fuel, or a cleaner for ICE, gas turbines, boilers, etc.

The essence of the invention is also that the process of supplying the electrolyzer is achieved by a productivity regulator that manages the quality and quantity of the gas produced by feedback on the combustion efficiency for a particular type of consumer, using the collected feedback data or database. This way of operation achieves a significantly more efficient additization process, which enables optimum utilization of the base fuel and a maximum reduction of harmful exhaust gases emission during combustion, whereby this process can be constant or intermittent. Significantly, in case of intermittent additization, the electrolyzer operation is managed so that the quality and quantity of the additives, along with the optimum mode of operation of the consumer, play a key role in optimizing the cleaning process duration and the energy efficiency of the consumer after cleaning. It should be noted that data on the similar consumers' mode of operation during consumer cleaning are already in the database and that the productivity regulator instructs the consumer about the mode of operation based on these data or feedback. If communication between the consumer and the productivity regulator is disabled, the consumer mode of operation is managed by the operator based on the information received through the control panel which is determined by the productivity regulator based on the consumer parameters obtained through the feedback or from the database. The electrolysis control through the productivity regulator enables the use of solutions with increased concentration of electrolyte, while at the same time it is possible to use minimum concentrations of electrolyte for longer functioning period of electrodes and longer service interval, cheaper materials from which electrodes are made in cases where a heater is installed in the electrolyzer or the ambient temperature is always above zero, with the note that in this way the electrolyzer becomes much more resistant to lower ambient temperatures, or its freezing point is lowered, which is usually a big problem in most electrolyzers used today.

The essence of the invention is also reflected in that the inventive idea was used to construct a modular electrolyzer consisting of one or more tanks, one of which may contain a dry filter housing, whereby the modules are designed to provide self-support and easy installation of cell stacks whose number is adapted to the specified production capacity, type and volume of the vehicle aggregate (engine) etc. This type of integrated tanks located within the device avoids additional installations (hoses, pipes, connections, etc.) that are normally the components of similar electrolyzers entailing possible leakage of electrolytes, significantly increasing the device dimensions and requiring additional brackets or boxes for their storage as well as special mounting.

The essence of the invention is also that the invention device construction enables simple and easy connection of cell stacks, which are placed in a series, in parallel or combined, according to the engine displacement, the required capacity and the designed power of the electrolyzer.

The novelty of the invention is that a filter housing within the tank is made so as to carry out the automatic separation of condensates which, just like very small amounts of electrolytes, return through the vertical ducts between the tank and the filter housing.

The essence of the invention is also an analog meter with a transparent scale calibrated for the minimum and maximum and placed on the tank, whereby the range between the minimum and the maximum electrolyte level is designed in a way that changes in the electrolyte levels within that range minimally affect the electrolyzer characteristics. The novelty of the invention is also that the analog meter with the transparent scale is made as an illuminated plate with matted fields which, when illuminated, reflect the light passing through the electrolyte so that the surface of the liquid and gas phase merging is clearly plotted and easily noticeable, which is important in the frequent control of the electrolyte level.

Certainly, a significant novelty of the invention is also the cell structure that is made so that the ratio between the height and the thickness of the seal, in relation to the effective surface of the electrode involved in the electrolysis, is such that it neutralizes the increase in electrical conductivity due to the decrease in the level of electrolytic solution.

It is especially emphasized that with the usage of the water filter, the produced gas is of uniform humidity and temperature, and it is constructed as another module within the assembly and connected so that when the device is cooled by naturally formed underpressure in the electrolyzer, the distilled water with traces of the electrolyte from the gas is automatically extracted from the water filter resulting in lower water consumption, automatic flushing of the water filter and maintaining a constant concentration of the electrolytic solution during the service interval.

The novelty is also that the water filter is designed so that it safely releases the pressure generated by the gas explosion in the filter gas phase through the safety membrane plug and at the same time prevents the return flame breaking into the electrolyzer.

It is especially emphasized that the electrolyzer withstands pressure increase by simple installation of a damper or valve between the tank and the water filter, particularly in cases of need for pulsed gas dozing in applications where this results in a short-term increase in the combustion intensity or more efficient release of gas bubbles from the electrode surface. This is very important in applications that require gas productivity higher than the nominal one, that is, when it is necessary to pass through the device the electric current intensity greater than the nominal one for a certain useful surface of the electrodes.

The essence of the invention is also that it controls the intensity and shape of the electrolyzer electric current through the productivity regulator which solves the problem of the changing quality of the electrolysis product and the stable electrolyzer operation.

It is especially emphasized that supplying the electrolyzer with the given shape and intensity of the current completely eliminates the electrolysis' dependence on the electricity source voltage, which is important especially when it is known that electrolyzers behave differently from other consumers, since their current-voltage characteristic is pronouncedly non-linear, which is especially characteristic of electrolyzers with negligible losses of current. It is also known that the influence of the electrolysis threshold voltage causes the existence of an electrolyzer threshold voltage below which the electrolyzer current is very low, and above which relatively small voltage changes significantly affect the electrolyzer current.

What makes the present electrolyzer different from others comparable electrolyzers is the structure that integrates the tanks and filters, thus enabling modularity and reproducibility, which, with the management procedure that extracts the optimal quality, leads to the optimization of its dimensions without affecting the result. The present technical solution of the electrolyzer and the procedure for its application lead to the fact that a substantially smaller quantity of additives will suffice, therefore implying significantly less invested power and smaller dimensions.

The essence of the invention is also that according to the author's idea, temperature extraction is most efficiently and evenly achieved by using air-cooled electrodes, since this solution proved to be the most convenient as the number of assembly elements does not increase, and in this case the cells are simply connected in the same way as in versions where cooling is not necessary.

In relation to the technical solutions so far known to the author, the application of the electrolyzer controlled by a current intensity and shape regulator has several advantages, some of which include the following:
- by controlling the electrolyzer current, it has been achieved that changes in the electrolyzer electrical conductivity due to temperature change, the voltage drop on the lines, and changes in the electrolytic solution concentration no longer affect the current intensity,
- electrolyzers in which the control of the production of hydrogen and/or oxygen gas is achieved in the manner described in the invention have a much wider range of uses under different temperature conditions which are for all other devices of this type a significant limiting factor,
- by alternate power supply of cell stacks, it is possible for one productivity regulator to supply two or more cell stacks as in cases when the stack is supplied by an impulse train of a certain time period, where the impulse lasts less than 50% of the time period, the productivity regulator allows alternate power supply of two or more cell stacks, so that both stacks are pulsed within one impulse train time period, thereby providing that all the stacks are supplied by the same impulse train with the trains being moved for one impulse duration one relative to the other.

A modular device for producing hydrogen and oxygen gases, and a process for the production of hydrogen and oxygen gases using such modular device according to the present invention are defined in claims 1 and 6 respectively.

Further preferred embodiments of the present invention are defined in the dependent claims.

### SHORT DESCRIPTION OF DRAWINGS

In order to facilitate the understanding of the invention as well as to demonstrate how it can be realized in practice, the author, only with the aim of exemplifying, refers for the attached drafts relating to the present application where:
- Figure 1 shows the axonometric view of the two-stack electrolyzer with a water filter;

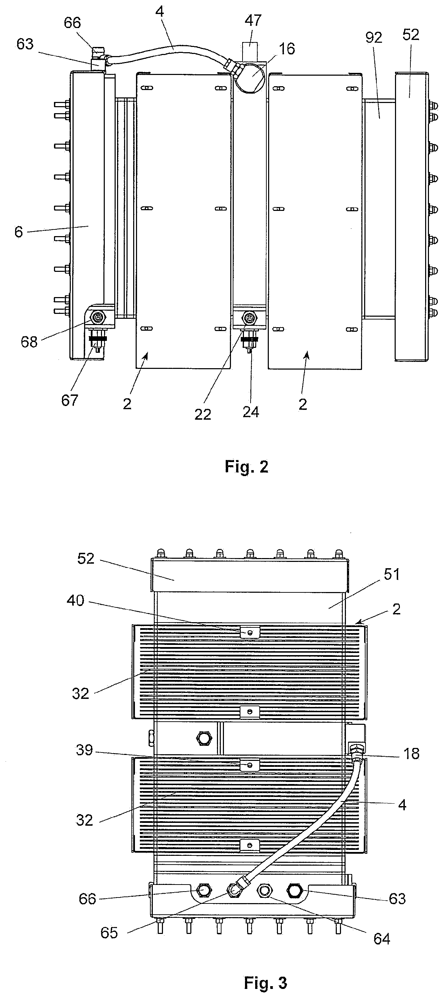

- Figure 2 shows the side view of the two-stack electrolyzer with a water filter;
- Figure 3 shows the top view of the two-stack electrolyzer with a water filter;
- Figure 4 shows the axonometric view of the water filter from the grid side;
- Figure 5 shows the view of the water filter from the back side containing the subplate with the meter;
- Figure 6 shows the side view of the water filter;
- Figure 7 shows the bottom view of the water filter;
- Figure 8 shows the axonometric view of the electrolyzer tank;

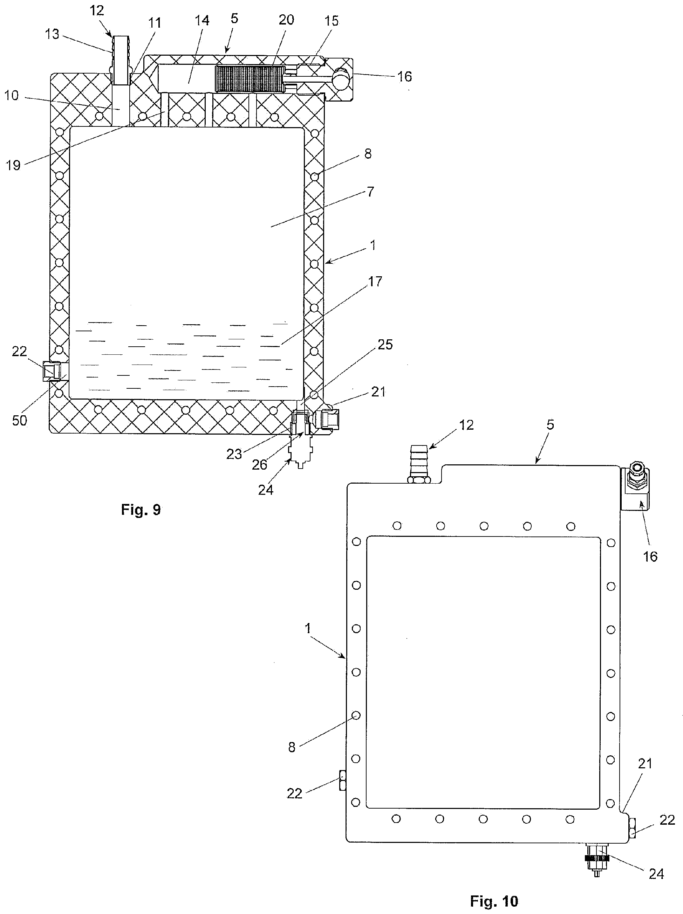

- Figure 9 shows the vertical cross-section of the electrolyzer tank;
- Figure 10 shows the front view of the electrolyzer tank;

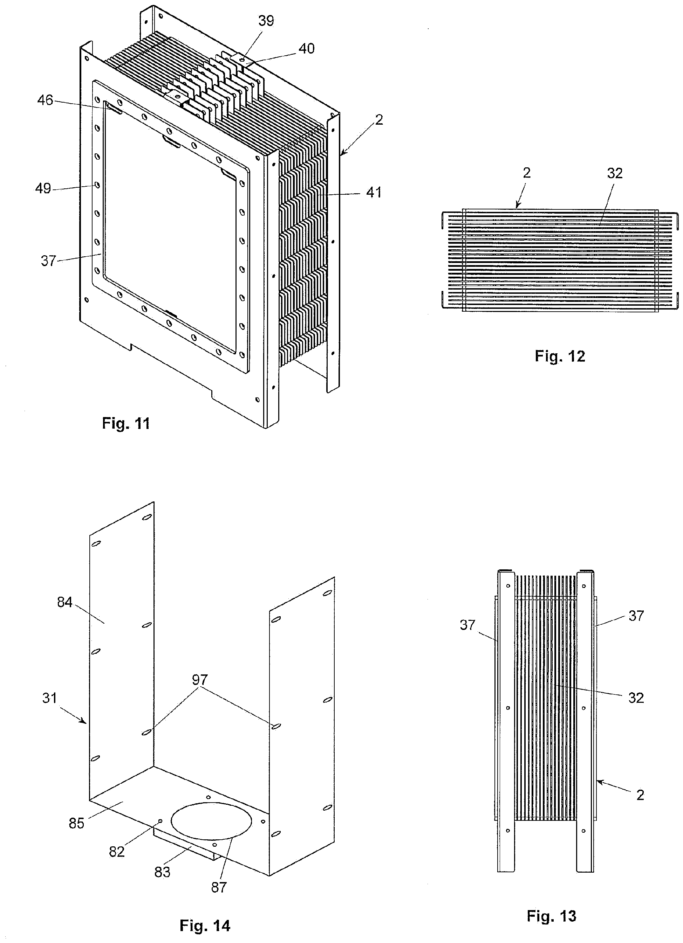

- Figure 11 shows the axonometric view of the electrolyzer stack;
- Figure 12 shows the top view of the stack;
- Figure 13 shows the side view of the stack;
- Figure 14 shows the deflector with a circular fan hole;

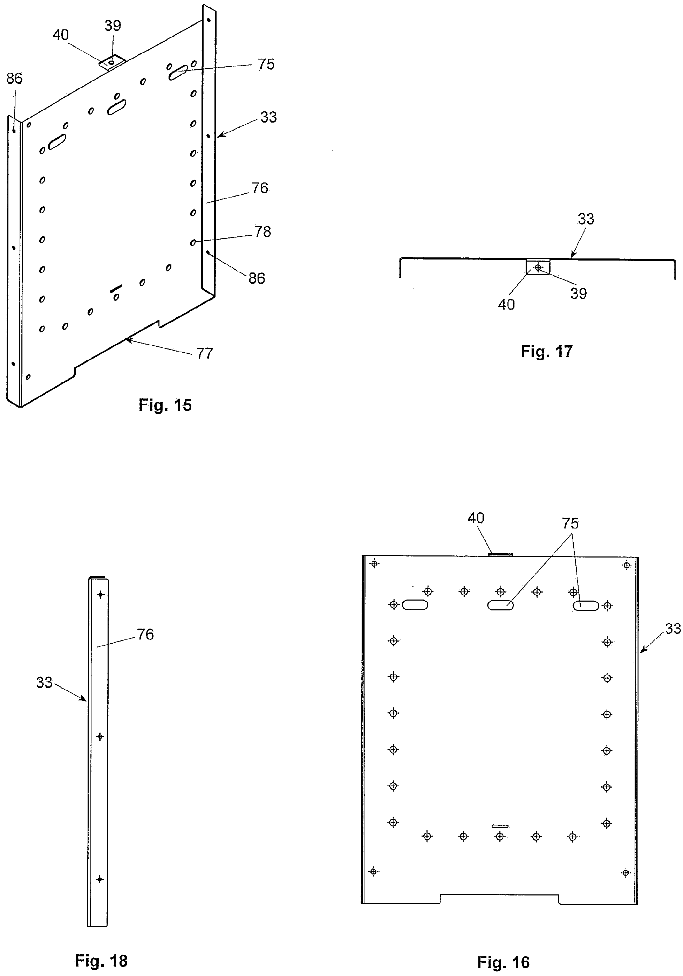

- Figure 15 shows the axonometric view of the voltage electrode;
- Figure 16 shows the front view of the voltage electrode;
- Figure 17 shows the top view of the voltage electrode;
- Figure 18 shows the side view of the voltage electrode;

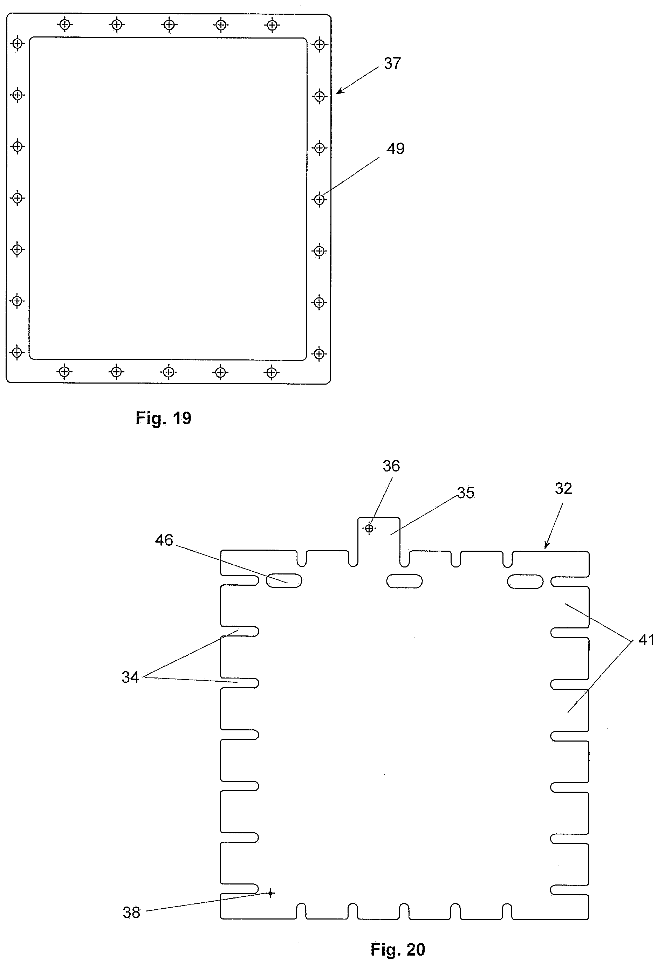

- Figure 19 shows the rubber seal;
- Figure 20 shows the neutral electrode;
- Figure 21 shows the horizontal cross-section of the stack;
- Figure 22 is a chart showing the temperature effect on the current depending on voltage change;
- Figure 23 is a chart showing the concentration effect on the current depending on voltage change at a constant temperature;
- Figure 24 shows a schematic view of controlling the electrolyzer operation via the productivity controller using a database and feedback with constant additization;
- Figure 25 shows a schematic view of controlling the electrolyzer operation via the productivity controller using a database and without feedback;
- Figure 26 shows the axonometric view of the water filter tank;

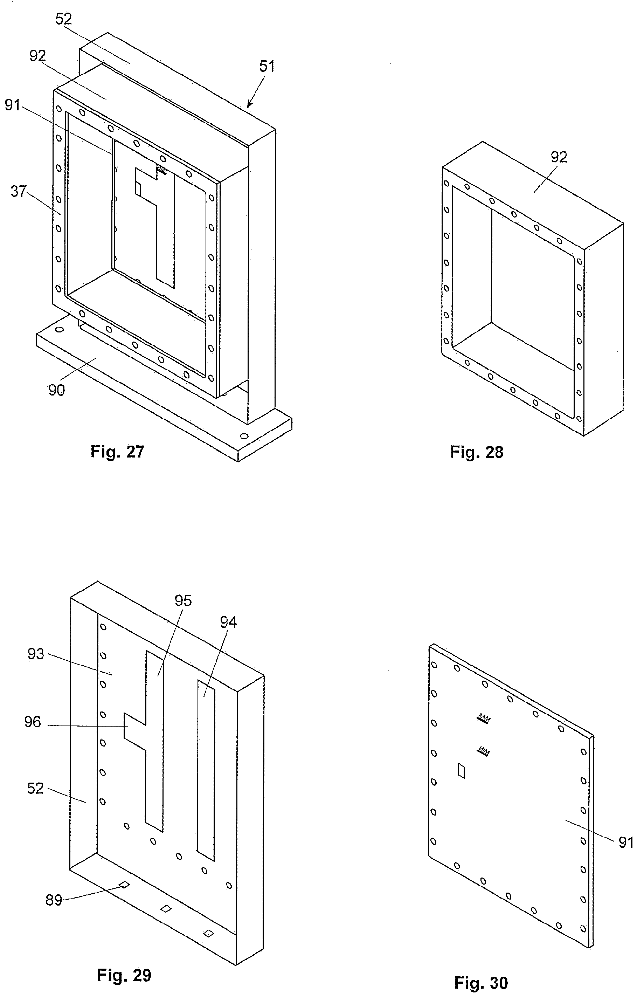

- Figure 27 shows the axonometric view of the auxiliary tank with a vertical bracket;
- Figure 28 shows the axonometric view of the auxiliary tank body;
- Figure 29 shows the axonometric view of the auxiliary tank vertical bracket;
- Figure 30 shows the axonometric view of the rear measuring plate;
- Figure 31 shows a schematic view of controlling the electrolyzer operation via the productivity controller using a database and feedback with intermittent additization;
- Figure 32 shows the safety membrane plug with an input connector.

### DETAILED DESCRIPTION OF THE INVENTION

The invented modular device for the production of reproducible quality hydrogen and oxygen gases consists of, as can be seen from the accompanying drafts, a central tank assembly 1 with a dry filter 20, a stack assembly comprised of one or more cell stacks 2, an assembly of water filter 6, an assembly of auxiliary tank 51 with a vertical cell bracket 52 and an electronic assembly 3 through which the electrolyzer is supplied and the electrolysis process is managed.

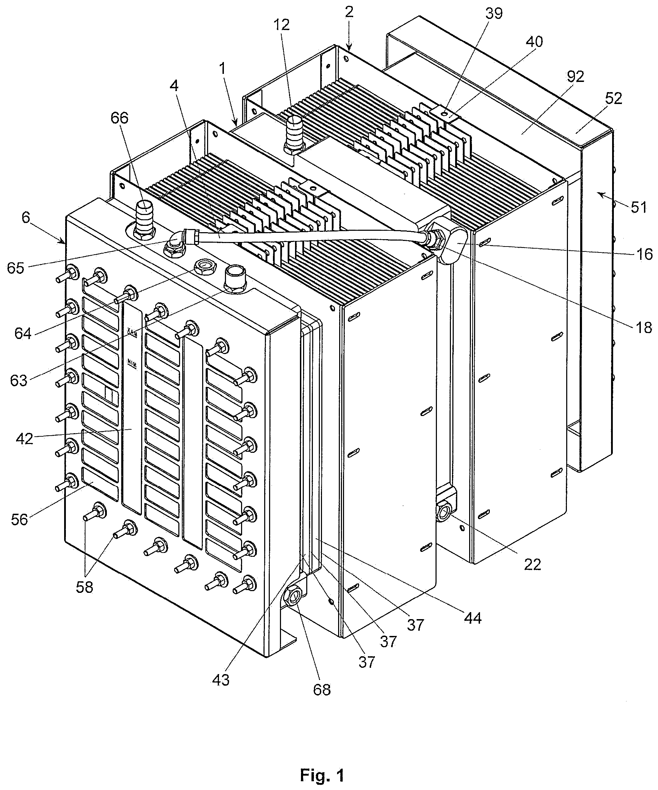

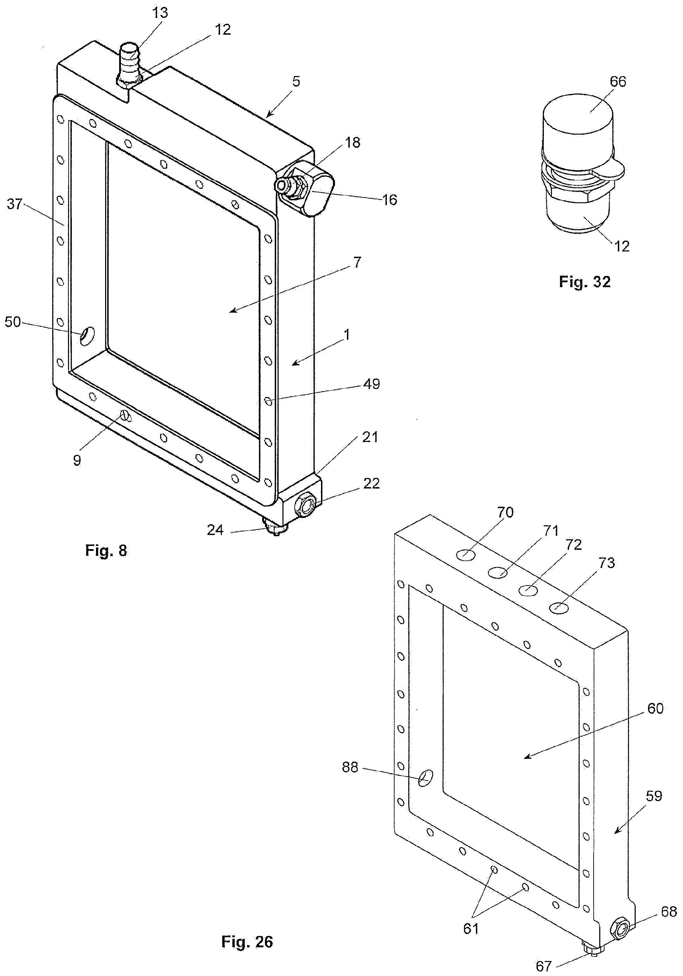

The central tank 1, as can easily be seen from Figure 1, is in the example provided as a proof of the invention feasibility shown in the form of a hollow cuboid edged by a four-sided frame of a rectangular cross-section and is preferably made of high-strength plastic with folded, fitted and interconnected edges, whereby it can also be made by milling a plate or by injection, which makes its production slightly more expensive. The body of the central tank 1 is inserted between the stacks 2 and has a centrally positioned opening 7 of the rectangular cross-section, whose longer and shorter side rims have evenly spaced openings 8 for screws 9, which are used to screw the stacks 2. From the front side to the central tank 1, as can be seen from Figure 8, seals 37 are inserted to prevent unintended leakage of the produced gas and electrolyte 17. The device symmetry is achieved by the cell stacks 2 being placed sideways from the central tank 1, wherein the number of stacks is always even, thus achieving the device symmetry. In this way, alternating power supply of cell stacks 2 is enabled, allowing one productivity regulator 98 to control the operation of two or more cell stacks 2 in cases where for adequate quality and quantity it is necessary to supply the stack by a periodic impulse train, when half of the time is used to supply one side of the cell stacks 2, and the second half of the time is used for the other side of the cells stacks 2, maximizing the regulator 98 utilization. In this way, the uneven mixing of the electrolyte 17 is eliminated. It is necessary to emphasize that even mixing of the electrolyte, especially in the cases of alternating supply, provides approximately the same electrical conductivity. On the upper part of the central tank 1, an appropriate opening is made on which the tubular cavity 10 is positioned for pouring the electrolyte 17 with the thread 11 the screwing of which fastens the inlet connection 12 with ribbing 13 on which the safety membrane plug 66 is fixed by putting around. The safety membrane plug 66 is made of elastic material and has a dual function: to seal the opening and to release the device pressure caused by the explosion of gas from the return flame, or due to the blockage of the hose 4 for the discharge of the gas from the electrolyzer 30 to the consumer 28, as otherwise the device would be destroyed. It should be noted that the electrolyte 17 is poured only during the formation of the electrolyzer 30 and at servicing, while in the further procedure of using the device, only distilled water is refilled. Extending from the upper rib of the tank 1 is a dry filter casing 5 in the center of which a tubular cavity 14 of the circular cross-section is placed with a thread 15 cut in the free end on which the cylindrical coupling 16 with the connector 18 of the hose 4 is fastened by threading, by means of which the purified the gas from the tubular opening 19 goes to the consumer air intake or the water filter 6 with the note that in the case of bridging the water filter 6, it can be used as an auxiliary tank. Radially around the tubular cavity 14, there are tubular openings 19 through which the central tank 1 is connected to the dry filter casing 5 enabling the gas obtained by the electrolysis to reach the filter 20 on which the purification is carried out so that the pure gas without the electrolyte goes to the vehicle's aggregate. Although these are minimum quantities of the electrolyte, its existence could lead to damage to aluminum parts of the engine, which is why it is efficiently removed using the dry filter 20. According to the invention idea of the author, vertical openings 19 are designed so that they allow the condensate deposited at the bottom of the tubular cavity 14 after the filtration to be returned to the central tank 1, which reinstates the electrolyte to support the electrolysis. The dry filter 20 is made of glass wool coated with a stainless steel grid, cylindrical in shape and axially attached to the cavity 14, so that one end thereof is connected to the coupling 16 by means of which the purified electrolytic gas goes through the hose 4 into the consumer's aggregate or the water filter 6. On the lower part of the central tank 1, a reinforcement 21 is made in an integral way, with a side outlet for the discharge of the electrolyte 17 with a closed plug 22 of the discharge. From the underside of the reinforcement 21 by a thread 23 in the cylindrical bearing 26, a service valve 24 is fixed that in its closed position rests on the opening of the tubular cavity 25 connected to the opening 7 of the central tank 1. On the side of the central tank 1, against the reinforcement 21, optionally, depending on the conditions and application of the device itself, a circular opening 50 for the temperature sensor, pressure sensor etc. is made.

According to the invention, the modular device for the production of reproducible quality hydrogen and oxygen gases is composed of one or more cell stacks 2, which are placed in series, in parallel or in a combined manner to the central tank 1. Connecting the stack 2 with the central tank 1 is achieved by screws 9 through the circumferentially made openings on the stack 2, with these openings being analogous to the openings 8 on the central tank 1. This way of connecting the tank 1 with the stacks 2 achieves the self-supporting function of the central tank 1 as the central tank 1 is placed within the electrolyzer 30 so that it does not require additional installations for connecting, and at the same time reduces the possibility of electrolyte 17 leakage. It is particularly important that the size of such an electrolyzer 30 is significantly reduced and does not require special structures for attaching several elements commonly found within the electrolyzer, as is the case when the central tank 1 is placed externally. Between the central tank 1 and the stack 2, a seal 37 is inserted, made of elastomer, just like all other seals in the electrolyzer 30, which are identical in shape and fit the sides of the central tank 1 and the stack 2 so as to provide full sealing and leakage-proofing of the assembly, which also prevents the possibility of creating a short circuit.

Stacks 2, representing separate modules, are made up of a series of parallel-mounted neutral electrodes 32 inserted between the corresponding voltage electrodes 33, seated in the deflector 31, made so as to be comprised of two vertical lateral sides 84 with openings 97, interconnected on the bottom side with a horizontal connector 85 on which a circular opening 87 is formed in the center, which is also a tray for the fan 83 which is secured to the electrolyzer 30 by means of screws through the openings 82. The deflector 31 is attached to the stack 2 by means of screws through the lateral openings 97 and the openings 86 on the voltage electrode 33. The fan 83 is standardized, which is why it is not specifically explained and illustrated in the invention draft. The deflector 31 is made of polycarbonates and provides uniform heat removal from the ribs of the electrodes 32, 33 of the stack 2. It is to be noted that the electrodes 32, 33 have the same useful surface as the central tank 1. Neutral electrodes 32 are of rectangular cross-section and have uniformly arranged circular openings 34 representing mounting bases matching the openings 8 which are the mounting bases on the central tank 1. At the upper edge of each neutral electrode 32 rectangular contacts 35 with centrally positioned openings 36 are made over which power supply is connected by means of screws, and at their lateral edges, drains 41 are made to enhance the cooling function. Small openings 38, made at the bottom of neutral electrodes 32, serve for electrolyte flow, or for equalizing the level of electrolyte in the cells. When placing the plates of the electrodes 32 in the cell stack 2, it is taken into account that the distance between the opening 38 in the stack 2 is as large as possible, since in this way the losses are reduced, and it must also be taken into account that the diameter of the opening 38 should not be greater than the distance between the neutral electrodes 32. Between these electrodes, in order to prevent the leakage of the electrolyte 17, the seals 37 made of rubber, plastic or silicone are put, corresponding in shape and size to the neutral electrodes 32. In this way, the passage of the electrolyte 17 is enabled only through the opening 38, which is of small diameter and moved towards the edge of the electrode in order to minimize power losses. Around the rim of the seal 37, circular openings 49 are made for the passage of the screws 9 (studs) used for interconnecting the neutral electrodes 32. The screws 9 passing through the entire structure i.e. through the central tank 1 and the cells composed of the neutral electrodes 32 and seal 37 are electrically insulated with insulating material coatings, thereby preventing a direct short circuit between the neutral electrodes 32. At the top of neutral electrodes 32, horizontally symmetrically spaced ellipsoidal openings 46 are made for gas passing between the cells in the stack 2. It should be noted that the arrangement of the openings 46 on the neutral electrode 32 and the opening 75 on the voltage electrode 33, which serve to pass the produced gas is identical. The thickness of the seal 37 is the distance between the neutral electrodes 32 and defines the volume of the electrolytic cell. On each neutral electrode 32, electrical contact 35 is positioned at the upper edge, so that it can at the same be a voltage electrode. This can also be used to adjust the number of active cells in the stack 2, which makes the device adaptive, whereby, if necessary, the power supply of each cell is enabled separately. The first and last electrodes in the stack 2 are voltage electrodes 33 made as rectangular plates with orthogonal lateral sides 76 on which circular openings 86 are formed, through which the deflector 31 is fixed by means of screws, and at the bottom of the voltage electrode 33 there is a rectangular opening 77 which enables better cooling air flow. Around the circumference of the voltage electrodes 33, circular openings 78 for fastening and ellipsoidal openings 75 for passage of gas between the electrodes are made. In the center of the upper edge of the neutral electrode 32, the electrical contact 40 is positioned as an "L" outlet with a circular opening 39, by which the electric power supply of the electrolyzer 30 is connected using a screw.

This way of connecting stacks 2 in the electrolyzer 30 allows each cell in the stack 2 to be maximally accessible for diagnostics and measurement of voltage and temperature. In addition, the position of the central tank 1 installed between the stacks 2 eliminates uneven mixing and leakage of the electrolyte 17.

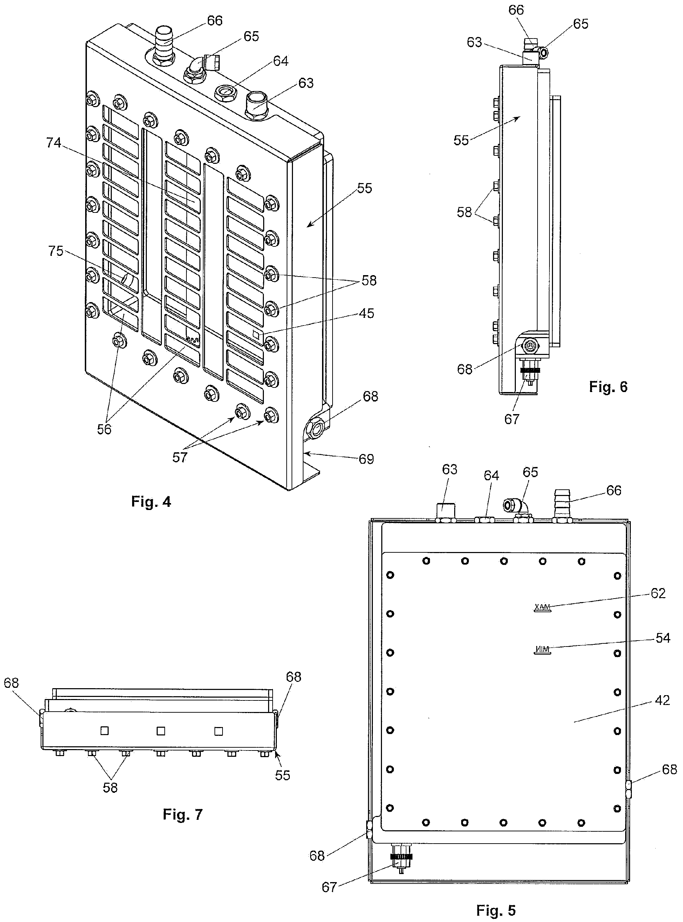

As can be seen from Figures 4, 5, 6 and 7, the water filter 6 is composed of a front mask 55 made in the form of a hollow cuboid, whose front face is closed by a grid formed of three vertical, equally spaced, rows of rectangular openings 56 around which circumferentially, at equal mutual distances, circular openings 57 are formed through which the screws 58 are pulled, by means of which the water filter 6 is connected to the stack 2 of the electrolyzer 30. In the front mask 55, a measuring plate 42 is inserted, which extends, through the seal 37, in a hollow-cuboid water tank 59, edged by a four-sided frame of rectangular cross-section and made preferably of high-strength plastic with folded, fitted and interconnected edges. On the body of the tank, centrally, the opening 60 of the rectangular cross-section is positioned, with evenly arranged openings 61 for the screws 9 along the shorter and longer sides, on rims, by means of which the transparent plates 43, 44 are fastened to the tank 59 between which the seals 37 are inserted. Measuring plate 42 is constructed as a rectangular transparent plate with inserted LED lighting 45 and matted fields which, when illuminated, reflect light so that it passes through the electrolyte 17, thereby forming a clear, easily visible line between the contact surfaces of the liquid and the gas phase, showing the electrolyte level. On the measuring plate 42, the calibrated markings for minimum 54 and maximum 62 are cut, whereby it should be especially emphasized that this range is designed so that the change in the level and concentration of the electrolyte 17 in relation to the given parameters minimizes the quality of the operation of the electrolyzer 30. This type of structure of the front mask 55 of the water filter 6 allows easy control of the electrolyte 17 level through the openings 56. On the upper horizontal surface of the water tank 59, openings 70, 71, 72, 73 are made into which the following is inserted: check valve 63 serving to release the underpressure from the water filter 6, an outlet with a plug 64 to taking the gas to the vehicle aggregate, a connector 65 of the hose 4 for connecting the water filter 6 to the housing 5 of the dry filter of the electrolyzer 30 and a safety membrane plug 66 which serves as a return flame safety device and through which, as necessary, water is refilled in the water filter 6. At the bottom of the water tank 59, a service valve 67 and an outlet with a plug 68 is provided to discharge water from the tank 59. For easier manipulation on the side of the front mask 55, an opening 69 is made at the spot of the service valve 67 and plug 68. Extending the connector 65, on the underside, through the water tank 59, is an axially inserted hose 74 which is used to spray the gas for better distribution in the water filter 6, thereby improving the purification. Against the service valve 67, on the side of the water tank 59, there is an optional opening 88 in which, depending on the conditions and application of the device itself, temperature sensors, pressure sensors, etc. are installed.

The water filter 6 serves to cool the gas and remove moisture from the gas resulting from the solution evaporation. The evaporation of the electrolytic solution passes with the gas through the water filter 6, which largely retains them, thereby gradually creating a mild solution of the electrolyte 17 which is, when the device is not in function, by naturally formed underpressure returned to the electrolyzer 30. In this way, water filter 6 is rinsed regularly, so that it is often refilled only with water, which ensures a significantly longer period of stability of the electrolytic solution initial concentration. This technical solution reduces the total consumption of water and electrolytic solution which directly affects the increase in the autonomy and service interval of the device.

The rear part of the electrolyzer 30 is comprised of the assembly of an auxiliary tank 51 composed of a vertical bracket 52 which is through the openings 89 by means of screws fixed to the horizontal bracket 90 into which first the rear measuring plate 91 is inserted, to which via the seal 37 using screws 9 the body 92 of the auxiliary tank 51 is fixed, coupled to the rear side of the stack 2 via the seal 37. The vertical bracket 52 is formed as a hollow rectangular body whose side oriented to the electrolyzer is open, while the rear side 93 is made as a rectangular plate with a narrow vertical rectangular opening 94 and also a narrow rectangular opening 95 on which a side rectangular opening 96 is provided allowing the control of the electrolyte 17 level in the electrolyzer 30. The body 92 of the auxiliary tank 51 is of the same shape and made of the same material as the body of the central tank 1 with a difference that there are no openings for plugs, valves, and connector on it. The rear measuring plate 91 is made of the same material and is identical in size to the measuring plate 42 and also has minimum and maximum engraved on it. The auxiliary tank 51 increases the autonomy of the electrolyzer 30, and the number of auxiliary tanks within the electrolyzer 30 may vary. If there are multiple auxiliary tanks 51, only the last one, by which the assembly ends, has the rear measuring plate 91 while the remaining only have the body 92 of the tank. The rear side 93 also represents the mounting base for forming the assembly.

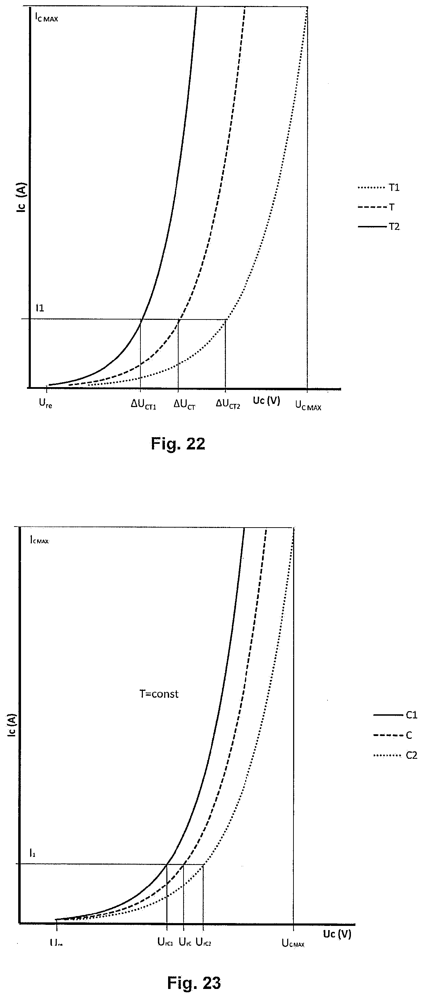

The electric current flowing through the electrolyzer 30 depends on the voltage on each cell, the electrolyte concentration, and the temperature, therefore, for the sake of better viewing the operation of the electrolyzer 30, Figure 23 shows a chart illustrating the dependence of the electrolyzer 30 current for the three values of the temperature to which T1 > T > T2 applies. From this chart, it can be noted that the increase in temperature reduces the cell resistance, so it is necessary to reduce the cell voltage to maintain the current. I_{cmax} is the maximum cell current that depends on the effective surface of the electrodes and the type of the cell. Uᵣₑ is reversible cell voltage, which is at the same time the minimum voltage required to initiate the electrolysis (threshold voltage of the electrolysis). U_{cmax} indicates the highest required cell electric voltage. The maximum required voltage of the electrolytic cell depends on the structure and the purpose of the electrolyzer 30. From this, it follows that the operating range of the cell voltage is ΔU_{c}= U_{cmax} - Uᵣₑ. The dependence of the current on the voltage within the operating range of the cell is exponential, so it is noticeable from the chart that the voltage range of the cell ΔU_{c} required for the regulation of the cell electrolysis current is relatively small compared to the current range. If the voltage range for regulating the current electrolysis of a single cell is ΔU_{c} then the voltage range for regulating the current of the electrolyzer 30 of n series-connected cells is nΔU_{c}.

The chart, Figure 23, shows the dependence of the electrolysis current on the voltage U_{c} on the electrolytic cell for three different values of the electrolyte concentration, for which the condition C1 > C > C2 applies, where the temperature is T=const. The chart shows that the increase in electrolyte concentration causes an increase in the electrolysis current.

Based on the measurements performed on the prototype, it was found that the quality of the gas as an additive depends on the conditions in which it was obtained. If we take into account that the structure of the electrolyzer 30 is an element that is constant and convenient to change only if really necessary, the inventor has opted for the case where the sensitivity of the electrolyzer 30 to the voltage is neutralized by the current regulation. It should be noted that the current regulation must not be such as to imply only the control of its effective value, since the shape of the current depends on the present electrical conductivity, that is, on all other parameters, therefore, according to the invention, between the consumer 28 and the electric power source 79, a regulator 98 of electrolysis conductivity has been installed which has the ability to generate the given current functions. When the electric current of the desired intensity and shape flows through the electrolyzer 30, the other variable factors virtually have no effect on the quality and quantity of gas. Adequate quality and quantity of gas used as an additive or for another above-given purpose, for a particular consumer, depends on the type, the kind, the current state, the operating mode, the atmospheric influences, the quality of the base fuel, etc. In order to achieve adequate quality and quantity of additives, it is necessary to measure the efficiency of each consumer 28, and the obtained information or data from the database 27 are using the productivity regulator 98 applied to control the further electrolysis process in order to achieve the highest possible total consumer efficiency in specific conditions.

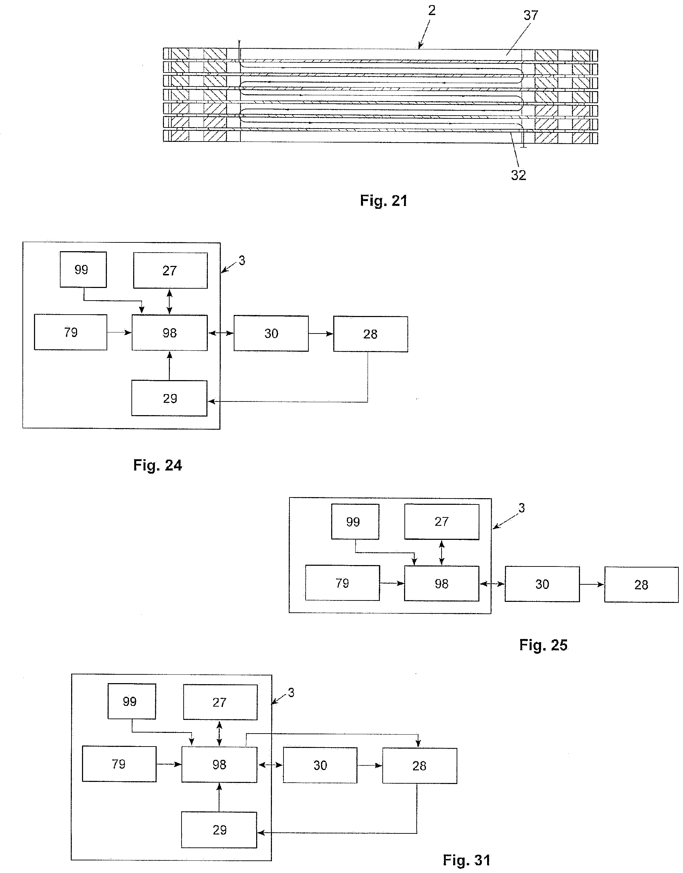

In accordance with consumer 28 efficiency information, the productivity regulator 98 automatically changes the intensity and shape of the current in order to optimize the utilization of the base fuel and reduce to the maximum the emission of harmful exhaust gases during fuel combustion, and it can be constructed in many ways. As its function is relevant to the present invention, for the purpose of proving the feasibility of the invention the inventor showed block diagrams in Figures 24, 25 and 31 displaying the function of the productivity regulator 98 in the electrolysis process in cases when there is a feedback 29 from the consumer 28, or when the production process takes place without it, i.e. when the operation of the electrolyzer 30 is controlled on the basis of the information from the database 27. The productivity regulator 98 provides a reproducible form of electric current, regardless of the number of cell stacks 2 and the number of cells in the stack 2. The automatic control of the current intensity gives manufacturers wider possibilities when constructing the electrolyzer 30 since they do not have to be adapted to the available power sources 79, and the undisturbed operation of the electrolyzer 30 in variable operating conditions and extreme temperature conditions has also been achieved.

In the basic mode of operation, Figure 24, the information on the current efficiency of the additization process goes from the consumer 28 via the feedback 29 to the productivity regulator 98, and based on it, as well as on the basis of the given parameters, the intensity and shape of the current are determined.

When the current efficiency information is not available, Figure 25, the shape and intensity of the electrolyzer 30 current are determined based on the given parameters and data from the database 27, using the possibility of producing a repeatable quality that corresponds to that type of consumer and storing it as the best result. According to the present invention, the specialty of the solution is also that in the absence of information on the electrolyzer 30 efficiency, the process of additization is carried out based on the parameters which gave the best results to a similar consumer. Namely, in practice, consumers with corresponding modes of operation are often repeated, and when the optimum power supply parameters for a particular mode of operation of a particular consumer are established, the control unit no longer needs information on efficiency, but the operation of the electrolyzer 30 is, by determining the optimum shape and the current intensity, controlled only on the basis of the given parameters or information on the mode of operation of this type of consumer. A similar consumer is determined algorithmically based on consumer characteristics. The additization process can be intermittent or constant, and the invention gives the possibility not to measure the efficiency of the additization process continuously when there is already sufficient information in the database 27 on the basis of which the productivity regulator 98 defines the optimum operation of the electrolyzer 30, i.e. the consumer. Such an approach to the additization process is particularly important when applying the invention to cleaning ICE, boilers, etc. which is certainly one of the most important effects of its application. Since it is not possible to instantly measure information on the effectiveness of intermittent additization in most consumer types, they are taken at a later stage and the parameters for future consumers are optimized in relation to the obtained results. In the case of intermittent additization, it is important to note that with information from the database 27 processed by the productivity regulator 98, besides information on the intensity and shape of the current, the algorithm selects the best mode of operation and instructs the consumer 28, as can be seen from Figure 31. If the direct communication between the consumer 28 and the productivity regulator 98 is not possible, the optimum operating mode of the consumer during the intermittent additization is set by the operator based on the information obtained from the control panel 99. The control of the electrolyzer 30 by the productivity regulator 98 can be different depending on the consumer's mode of operation currently used, so the productivity regulator 98 must adjust the current shape and intensity mode to the given consumer's mode of operation. It is also important to note that, based on the optimum parameters of the electrolyzer 30, the suitable number and size of the cells for a specific kind and type of the consumer is easily obtained without reducing the efficiency of additization, thus achieving significant savings in dimensions, weight and the necessary power of the device, and reducing the consumption of electricity and distilled water.

### INDUSTRIAL OR OTHER APPLICATIONS OF THE INVENTION

The industrial production of the present invention is absolutely possible in factories and well-equipped workshops for the production of electrical equipment and electronic devices, based on the workshop documentation that can be prepared by the experts in the subject field using the draft and description of the present application.

The invention is suitable for batch production. Its application is recommended in the chemical industry, metallurgy and other manufacturing processes using the electrolysis process. The device is suitable for both laboratory and industrial applications. The emphasis in the invention application is put on the electrolysis process in obtaining hydrogen and oxygen gases, with the note that the device can be successfully applied to the production of other electrolysis-based products.

The application of the invention is particularly recommended for all types of ICE engines, both for those of low power and low displacement that are installed in passenger cars, and for those high-power engines found overseas ships.

It is especially emphasized that prototype testing on different types of vehicles has shown a positive effect of the additive expressed through significant fuel savings on all ICEs, as well as significant reduction in harmful exhaust gases indicating that the presence of hydrogen and oxygen gases of reproducible quality, with specified application procedure, significantly prolongs the service life of the aggregate.

According to the invention, the devices can be successfully applied for cleaning and are particularly commercial as a single unit can maintain hundreds of systems, so the overall benefit is greater and it is possible to achieve a price of the system much higher than with the application requiring the constant presence of gas. The device is more expensive also as it requires far larger amounts of gas to shorten the process.

## Claims

1. A modular device for producing hydrogen and oxygen gases, comprising an electrolyzer (30) composed of central tank (1)with a cylinder shape dry filter (20), an assembly of stacks consisting of one or more pairs of cell stacks (2), an assembly of water filter (6), an assembly of auxiliary tank (51) with a vertical bracket (52) of cells and an electronic assembly (3) enabling the electrolysis process, where the central tank (1) is preferably made of high-strength plastic with folded, fitted and interconnected edges formed as a hollow cuboid edged by four-sided frame of rectangular cross-section and inserted between the cell stacks (2), the central tank (1) further having a centrally positioned opening (7) with a rectangular cross-section, whose longer and shorter side rims have evenly spaced openings (8) for screws (9) screwing the stacks (2), and by having seals (37) inserted from the front side to the central tank (1), and by having an appropriate opening on the upper part of the central tank (1) on which a tubular cavity (10) is positioned with a thread (11) fixing an inlet connection (12) with ribbing (13) on which a safety membrane plug (66) is fixed by putting around, and by having extending from the upper rib of the tank (1) a dry filter casing (5) for enabling the gas obtained by the electrolysis to reach the dry filter (20) on which the purification is carried out so that the pure gas without the electrolyte goes to the vehicle's aggregate, in the center of which the tubular cavity (14) of the circular cross-section is placed with a thread (15) cut in the free end on which a cylindrical coupling (16) with a connector (18) of the hose (4) is fastened, and by having, radially around a further tubular cavity (14) tubular openings (19) through which the central tank (1) is connected to the dry filter casing (5), and by having the dry cylinder-shaped filter (20) made of glass wool coated with a stainless steel grid and axially attached to the further cavity (14), so that one end thereof is connected to a coupling (16), whereby on the lower part of the central tank (1) a reinforcement (21) is made in an integral way, with a side outlet for the discharge of the electrolyte (17) solution and a closed plug (22) of the discharge, while from the underside of the reinforcement (21) a service valve (24) is fixed by a thread (23) in a cylindrical bearing (26) of the tank (1).

2. The modular device for producing hydrogen and oxygen gases, according to claim 1, **characterised by** having one or more pairs of cell stacks (2), placed in series, in parallel or in a combined manner to the central tank (1) fastened using screws (9) through the circumferentially made openings on the stack (2) and the central tank (1), whereby stacks (2) are made of a series of parallel-mounted neutral electrodes (32) inserted between the corresponding voltage electrodes (33), seated in the deflector (31), made so as to be comprised of two vertical lateral sides (84) interconnected on the bottom side with a horizontal connector (85) on which a circular opening (87) is formed in the center, which is also a tray for the fan (83) which is secured to the electrolyzer (30) by means of screws through the openings (82), while the deflector (31) is attached to the stack (2) by means of screws through the lateral openings (97) and the openings (86) on the voltage electrode (33), and by having neutral electrodes (32) of rectangular cross-section with circumferentially uniformly arranged circular openings (34) corresponding to the openings (8) on the central tank (1), and by having at the upper edge of each neutral electrode (32) rectangular contacts (35) with centrally positioned openings (36) over which power supply is connected by means of screws, and having at their lateral edges drains (41) and by having between these electrodes seals (37) made of plastic, rubber or silicone, corresponding in shape and size to the neutral electrodes (32), and by having screws (9) electrically insulated with insulating material coatings, and by having at the top of neutral electrodes (32) horizontally symmetrically spaced ellipsoidal openings (46), and by each neutral electrode (32) having the electrical contact (35) positioned at the upper edge, and in the center of the upper edge having the electrical contact (40) positioned as an "L" outlet with a circular opening (39), and by having the first and the last electrode in the stack (2) of voltage electrode (33) in the form of rectangular plates with orthogonal lateral sides (76) on which circular openings (86) are formed, through which the deflector (31) is fixed by means of screws, and at the bottom of the voltage electrode (33) there is a rectangular opening (77) while all around its circumference there are circular openings (78).

3. The modular device for producing hydrogen and oxygen gases, according to claim 1, **characterized by** having the water filter (6) composed of a front mask (55) made in the form of a hollow cuboid, whose front face is closed by a grid formed of three vertical, equally spaced, rows of rectangular openings (56) around which circumferentially, at equal mutual distances, circular openings (57) are formed through which the screws (58) are pulled, by means of which the water filter (6) is connected to the stack (2), and by having in the front mask (55) an inserted measuring plate (42), which extends, through the seal (37), in the hollow-cuboid water tank (59), edged by a four-sided frame of rectangular cross-section and made preferably of high-strength plastic with folded, fitted and interconnected edges, whereby on the body of the tank (59), centrally, the opening (60) of the rectangular cross-section is positioned, with evenly arranged openings (61) for the screws (9) along the shorter and longer sides, on rims, by means of which the transparent plates (43, 44) are fastened to the tank (59), between which the seals (37) are inserted, and by having a measuring plate (42) constructed as a rectangular transparent plate with inserted LED lighting (45) and matted fields, and by having on the measuring plate (42) calibrated markings engraved for minimum (54) and maximum (62), and by having on the upper horizontal surface of the water tank (59) openings (70, 71, 72, 73) into which the following is inserted: a one-way valve (63), an outlet with a plug (64), a connector (65) of the hose (4) and a safety membrane plug (66), and by having at the bottom of the water tank (59) a service valve (67) and an outlet with a plug (68), and by having as an extension of the connector (65), on the underside, through the water tank (59), an axially inserted hose (74).

4. The modular device for producing hydrogen and oxygen gases, according to claim 1, characterizec by having the rear part of the electrolyzer (30) made of the assembly of an auxiliary tank (51) composed of a vertical bracket (52) which is through the openings (89) by means of screws fixed to the horizontal bracket (90) into which first the rear measuring plate (91) is inserted, to which via the seal (37) using screws (9) the body (92) of the auxiliary tank (51) is fixed, coupled to the rear side of the stack (2) via the seal (37), and by having the vertical bracket (52) formed as a hollow rectangular body whose side oriented to the electrolyzer (30) is open, while the rear side (93) is made as a rectangular plate with a narrow vertical rectangular opening (94) and also a narrow rectangular opening (95) on which a side rectangular opening (96) is provided, and by having the body (92) of the auxiliary tank (51) of the same shape and of the same material as the body of the central tank (1), while the rear measuring plate (91) is made of the same material and is identical in size to the measuring plate (42) and also has markings for minimum and maximum engraved on it.

5. The modular device for producing hydrogen and oxygen gases, according to claim 1, **characterized by** having the electronic assembly (3) consisting of an electric power source (79) connected to the productivity regulator (98) and over it with the electrolyzer (30) wherein the production regulator (98) is connected to a database (27), a feedback (29) from consumer (29) and a control panel (99).

6. Process for the production of hydrogen and oxygen gases using the modular device according to claim 5, **characterized in that** the productivity regulator (98) changes the shape and intensity of the electric current supplied to the electrolyzer (30) based on information obtained from the feedback (29) on combustion efficiency and exhaust emission of the consumer (28)

7. Process for the production of hydrogen and oxygen gases, according to claim 6, **characterized in that** the productivity regulator (98) changes the shape and intensity of the electric current supplied to the electrolyzer (30) based on information from the database (27) on combustion efficiency and exhaust gases emissions of the consumer (28)

8. Process for the production of hydrogen and oxygen gases, according to claim 6 or 7, **characterized in that** the productivity regulator (98) stores the received information via feedback (29) on combustion efficiency and exhaust emissions and consumer (28) operating mode and the parameters of the intensity and shape of the current supplied to the electrolyzer (30) in the database (27).

9. Process for the production of hydrogen and oxygen gases, according to one of the claims 6 to 8, **characterized in that** the optimization of the number and size of the cells in the stacks (2) is performed on the basis of information obtained from the database (27) for a given consumer (28).

10. Process for the production of hydrogen and oxygen gases, according to claim 6, **characterized in that**, the fact that the productivity regulator (98), in cases where the stack is powered by an impulse train of a particular time period where the pulse lasts less than 50% of the time period, allows the alternating supply of two or more cell stacks (2), so that both stacks are pulsed within a single time period of the impulse trair

11. Process for production of hydrogen and oxygen gases, according to one of the claims 6 to 8, **characterized in that** the productivity regulator (98), in the case of intermittent production of hydrogen and oxygen gases changes the shape and intensity of the electric current supplied to the electrolyzer (30) based on feedback (29) information on combustion efficiency and exhaust emissions of the consumer (28) and assigns the operating mode to the consumer (28) based on information obtained from the database (27).

## Patentansprüche

1. Ein modulares Gerät zur Herstellung von Wasserstoff- und Sauerstoffgasen, umfassend einen Elektrolyseur (30), bestehend aus einem zentralen Tank (1) mit einem zylindrischen Trockenfilter (20), einer Anordnung von Zellstapeln, bestehend aus einem oder mehreren Paaren von Zellstapeln (2), einer Anordnung eines Wasserfilters (6), einer Anordnung eines Hilfstanks (51) mit einer vertikalen Halterung (52) für Zellen und einer elektronischen Einheit (3), die den Elektrolyseprozess ermöglicht, wobei der zentrale Tank (1) vorzugsweise aus hochfestem Kunststoff mit gefalteten, angepassten und miteinander verbundenen Kanten besteht, die als hohler Quader ausgebildet sind und von einem vierseitigen Rahmen mit rechteckigem Querschnitt eingefasst sind und zwischen die Zellstapel (2) eingesetzt werden, wobei der zentrale Tank (1) weiterhin eine zentral positionierte Öffnung (7) mit rechteckigem Querschnitt aufweist, deren längere und kürzere Seitenränder gleichmäßig verteilte Öffnungen (8) für Schrauben (9) aufweisen, mit denen die Zellstapel (2) verschraubt werden, wobei Dichtungen (37) von der Vorderseite in den zentralen Tank (1) eingesetzt werden, und eine geeignete Öffnung an der oberen Seite des zentralen Tanks (1) vorhanden ist, auf der eine röhrenförmige Vertiefung (10) mit einem Gewinde (11) positioniert ist, das einen Einlassanschluss (12) mit Rippen (13) fixiert, auf dem ein Sicherheitsmembranverschluss (66) durch Aufstecken befestigt ist, wobei vom oberen Rand des Tanks (1) ein Trockenfiltergehäuse (5) ausgeht, das es ermöglicht, dass das durch die Elektrolyse gewonnene Gas den Trockenfilter (20) erreicht, in dem die Reinigung erfolgt, sodass das reine Gas ohne Elektrolyt zum Aggregat des Fahrzeugs gelangt, in dessen Zentrum sich die röhrenförmige Vertiefung (14) mit kreisförmigem Querschnitt befindet, mit einem Gewinde (15) am freien Ende, auf dem eine zylindrische Kupplung (16) mit einem Anschluss (18) für den Schlauch (4) befestigt ist, wobei radial um eine weitere röhrenförmige Vertiefung (14) röhrenförmige Öffnungen (19) angeordnet sind, durch die der zentrale Tank (1) mit dem Trockenfiltergehäuse (5) verbunden ist, und der zylindrische Trockenfilter (20) aus Glaswolle besteht, die mit einem Edelstahlgitter beschichtet ist und axial an der weiteren Vertiefung (14) befestigt ist, sodass ein Ende davon mit einer Kupplung (16) verbunden ist, wobei am unteren Teil des zentralen Tanks (1) eine Verstärkung (21) integral ausgeführt ist, mit einem seitlichen Ausgang für die Entleerung der Elektrolytlösung (17) und einem geschlossenen Verschluss (22) der Entleerung, während von der Unterseite der Verstärkung (21) ein Serviceventil (24) mittels eines Gewindes (23) in einem zylindrischen Lager (26) des Tanks (1) befestigt ist.

2. Das modulare Gerät zur Erzeugung von Wasserstoff- und Sauerstoffgasen gemäß Anspruch 1, **dadurch gekennzeichnet, dass** es aus einem oder mehreren Paaren von Zellstapeln (2) besteht, die in Reihe, parallel oder in einer kombinierten Weise am zentralen Tank (1) angebracht sind, befestigt durch Schrauben (9), die durch die umlaufend angebrachten Öffnungen am Stapel (2) und am zentralen Tank (1) geführt werden, wobei die Zellstapel (2) aus einer Reihe von parallel montierten neutralen Elektroden (32) bestehen, die zwischen den entsprechenden Spannungselektroden (33) eingesetzt sind, welche in einem Deflektor (31) sitzen, der aus zwei vertikalen Seitenwänden (84) besteht, die an der Unterseite durch einen horizontalen Verbinder (85) miteinander verbunden sind, auf dem sich in der Mitte eine kreisförmige Öffnung (87) befindet, die gleichzeitig als Auflage für den Lüfter (83) dient, welcher mittels Schrauben durch die Öffnungen (82) am Elektrolyseur (30) befestigt ist, wobei der Deflektor (31) durch seitliche Öffnungen (97) und die Öffnungen (86) an den Spannungselektroden (33) mittels Schrauben am Stapel (2) angebracht ist, die neutralen Elektroden (32) einen rechteckigen Querschnitt mit umlaufend gleichmäßig angeordneten kreisförmigen Öffnungen (34) haben, die den Öffnungen (8) am zentralen Tank (1) entsprechen, am oberen Rand jeder neutralen Elektrode (32) rechteckige Kontakte (35) mit zentral positionierten Öffnungen (36) vorhanden sind, über die die Stromzufuhr mittels Schrauben angeschlossen wird, an den seitlichen Rändern Abflüsse (41) angebracht sind, zwischen diesen Elektroden Dichtungen (37) aus Kunststoff, Gummi oder Silikon liegen, die in Form und Größe den neutralen Elektroden (32) entsprechen, die Schrauben (9) elektrisch isoliert durch isolierende Materialbeschichtungen sind, an der Oberseite der neutralen Elektroden (32) horizontal symmetrisch angeordnete ellipsoide Öffnungen (46) vorhanden sind, jede neutrale Elektrode (32) den elektrischen Kontakt (35) am oberen Rand positioniert hat, wobei sich in der Mitte des oberen Randes der elektrische Kontakt (40) in Form eines "L"-förmigen Anschlusses mit einer kreisförmigen Öffnung (39) befindet, die erste und die letzte Elektrode im Stapel (2) Spannungselektroden (33) in Form rechteckiger Platten mit orthogonalen Seitenkanten (76) sind, an denen kreisförmige Öffnungen (86) angebracht sind, durch die der Deflektor (31) mittels Schrauben befestigt wird, und sich am unteren Rand der Spannungselektrode (33) eine rechteckige Öffnung (77) befindet, während entlang des gesamten Umfangs kreisförmige Öffnungen (78) angebracht sind.

3. Das modulare Gerät zur Erzeugung von Wasserstoff- und Sauerstoffgasen gemäß Anspruch 1, **dadurch gekennzeichnet, dass** der Wasserfilter (6) aus einer Frontmaske (55) besteht, die in Form eines hohlen Quaders ausgeführt ist, dessen Vorderseite durch ein Gitter mit drei vertikal, gleichmäßig beabstandeten Reihen rechteckiger Öffnungen (56) verschlossen ist, um diese Öffnungen herum gleichmäßig angeordnete kreisförmige Öffnungen (57) vorhanden sind, durch die die Schrauben (58) geführt werden, mit denen der Wasserfilter (6) am Zellstapel (2) befestigt ist, in die Frontmaske (55) eine Messplatte (42) eingesetzt ist, die sich durch die Dichtung (37) in den hohl-quaderförmigen Wassertank (59) erstreckt, wobei der Wassertank (59) von einem vierseitigen Rahmen mit rechteckigem Querschnitt begrenzt wird und vorzugsweise aus hochfestem Kunststoff mit gefalteten, angepassten und miteinander verbundenen Kanten besteht, sich im zentralen Bereich des Tankkörpers (59) eine Öffnung (60) mit rechteckigem Querschnitt und gleichmäßig angeordneten Öffnungen (61) für die Schrauben (9) entlang der kürzeren und längeren Seiten an den Rändern befindet, durch die die transparenten Platten (43, 44) am Tank (59) befestigt werden, zwischen denen die Dichtungen (37) eingesetzt sind, die Messplatte (42) als rechteckige transparente Platte mit integrierter LED-Beleuchtung (45) und mattierten Feldern konstruiert ist, auf der Messplatte (42) kalibrierte Markierungen für Minimum (54) und Maximum (62) eingraviert sind, auf der oberen horizontalen Fläche des Wassertanks (59) Öffnungen (70, 71, 72, 73) vorhanden sind, in die folgende Komponenten eingesetzt sind: ein Rückschlagventil (63), ein Auslass mit Verschluss (64), ein Anschluss (65) für den Schlauch (4) und ein Sicherheitsmembranverschluss (66), am unteren Teil des Wassertanks (59) ein Serviceventil (67) und ein Auslass mit Verschluss (68) angebracht sind und als Verlängerung des Anschlusses (65) auf der Unterseite durch den Wassertank (59) ein axial eingesetzter Schlauch (74) angebracht ist.

4. Das modulare Gerät zur Erzeugung von Wasserstoff- und Sauerstoffgasen gemäß Anspruch 1, **dadurch gekennzeichnet, dass** der hintere Teil des Elektrolyseurs (30) aus einer Baugruppe eines Hilfstanks (51) besteht, die eine vertikale Halterung (52) umfasst, die durch Öffnungen (89) mittels Schrauben an der horizontalen Halterung (90) befestigt ist, in diese zuerst die hintere Messplatte (91) eingesetzt wird, an der durch die Dichtung (37) und Schrauben (9) der Körper (92) des Hilfstanks (51) befestigt ist, welcher über die Dichtung (37) mit der Rückseite des Zellstapels (2) verbunden ist, wobei die vertikale Halterung (52) als hohler rechteckiger Körper ausgeführt ist, dessen zum Elektrolyseur (30) gerichtete Seite offen ist, während die Rückseite (93) als rechteckige Platte mit einer schmalen vertikalen rechteckigen Öffnung (94) und einer weiteren schmalen rechteckigen Öffnung (95) ausgeführt ist, an der sich eine seitliche rechteckige Öffnung (96) befindet, der Körper (92) des Hilfstanks (51) die gleiche Form hat und aus demselben Material besteht wie der Körper des zentralen Tanks (1), die hintere Messplatte (91) aus demselben Material gefertigt ist und dieselben Abmessungen wie die Messplatte (42) hat, wobei sie ebenfalls mit Markierungen für Minimum und Maximum versehen ist.

5. Das modulare Gerät zur Erzeugung von Wasserstoff- und Sauerstoffgasen gemäß Anspruch 1, **dadurch gekennzeichnet, dass** die elektronische Einheit (3) aus einer Stromquelle (79) besteht, die mit dem Produktivitätsregler (98) verbunden ist und über diesen mit dem Elektrolyseur (30) gekoppelt ist, wobei der Produktivitätsregler (98) mit einer Datenbank (27), einer Rückkopplung (29) vom Verbraucher (28) und einem Steuerpanel (99) verbunden ist.

6. Verfahren zur Herstellung von Wasserstoff- und Sauerstoffgasen unter Verwendung des modularen Geräts gemäß Anspruch 5, **dadurch gekennzeichnet, dass** der Produktivitätsregler (98) die Form und die Intensität des elektrischen Stroms, der dem Elektrolyseur (30) zugeführt wird, basierend auf Informationen aus der Rückkopplung (29) zur Verbrennungseffizienz und den Abgasemissionen des Verbrauchers (28) verändert.

7. Verfahren zur Herstellung von Wasserstoff- und Sauerstoffgasen gemäß Anspruch 6, **dadurch gekennzeichnet, dass** der Produktivitätsregler (98) die Form und die Intensität des elektrischen Stroms, der dem Elektrolyseur (30) zugeführt wird, basierend auf Informationen aus der Datenbank (27) über die Verbrennungseffizienz und die Abgasemissionen des Verbrauchers (28) verändert.

8. Verfahren zur Herstellung von Wasserstoff- und Sauerstoffgasen gemäß Anspruch 6 oder 7, **dadurch gekennzeichnet, dass** der Produktivitätsregler (98) die über die Rückkopplung (29) erhaltenen Informationen zur Verbrennungseffizienz, den Abgasemissionen und dem Betriebsmodus des Verbrauchers (28) sowie die Parameter der Intensität und Form des an den Elektrolyseur (30) gelieferten Stroms in der Datenbank (27) speichert.

9. Verfahren zur Herstellung von Wasserstoff- und Sauerstoffgasen gemäß einem der Ansprüche 6 bis 8, **dadurch gekennzeichnet, dass** die Optimierung der Anzahl und Größe der Zellen in den Zellstapeln (2) auf der Grundlage der aus der Datenbank (27) für einen bestimmten Verbraucher (28) erhaltenen Informationen durchgeführt wird.

10. Verfahren zur Herstellung von Wasserstoff- und Sauerstoffgasen gemäß einem der Ansprüch 6, **dadurch gekennzeichnet, dass** der Produktivitätsregler (98) in Fällen, in denen der Zellstapel mit einer Impulsfolge eines bestimmten Zeitraums gespeist wird, wobei der Impuls weniger als 50 % des Zeitraums dauert, die abwechselnde Versorgung von zwei oder mehr Zellstapeln (2) ermöglicht, sodass beide Zellstapel innerhalb eines einzigen Zeitraums der Impulsfolge gepulst werden.

11. Verfahren zur Herstellung von Wasserstoff- und Sauerstoffgasen gemäß einem der Ansprüche 6 bis 8, **dadurch gekennzeichnet, dass** der Produktivitätsregler (98) im Falle einer intermittierenden Produktion von Wasserstoff- und Sauerstoffgasen die Form und die Intensität des an den Elektrolyseur (30) gelieferten elektrischen Stroms auf Grundlage der über die Rückkopplung (29) erhaltenen Informationen zur Verbrennungseffizienz und den Abgasemissionen des Verbrauchers (28) verändert und den Betriebsmodus des Verbrauchers (28) basierend auf Informationen aus der Datenbank (27) zuweist.

## Revendications

1. Un dispositif modulaire pour la production d'hydrogène et d'oxygène gazeux, composé d'un électrolyseur (30) constitué d'un réservoir central (1) avec un filtre sec de forme cylindrique (20), d'un ensemble de piles constitué d'une ou plusieurs paires de piles à cellules (2), d'un ensemble de filtre à eau (6), d'un ensemble de réservoir auxiliaire (51) avec un support vertical (52) de cellules et d'un ensemble électronique (3) qui permet le processus d'électrolyse, où le réservoir central (1) est de préférence en plastique à haute résistance avec des bords pliés, ajustés et interconnectés, formé comme un cuboïde creux bordé par un cadre à quatre côtés de section rectangulaire et inséré entre les piles à cellules (2), le réservoir central (1) ayant une ouverture (7) de section rectangulaire positionnée au centre, dont les bords latéraux plus longs et plus courts présentent des ouvertures régulièrement espacées (8) pour les vis (9) vissant les piles (2), et en ayant des joints (37) insérés du côté avant au réservoir central (1), et en ayant une ouverture appropriée sur la partie supérieure du réservoir central (1) sur laquelle une cavité tubulaire (10) est positionnée avec un filetage (11) fixant le raccord d'entrée (12) avec une nervure (13) sur laquelle le bouchon de la membrane de sécurité (66) est fixé en l'entourant, et en ayant, à partir de la nervure supérieure du réservoir (1), l'enveloppe du filtre sec (5) pour permettre au gaz obtenu par électrolyse d'atteindre le filtre sec (20) sur lequel la purification est effectuée, de manière à ce que le gaz pur, sans l'électrolyte, soit dirigé vers l'ensemble du véhicule au centre de laquelle la cavité tubulaire (14) de section circulaire est placée avec un filetage (15) coupé dans l'extrémité libre sur laquelle le cylindre (10) est placé avec un filetage (11) qui sert à fixer le raccord d'entrée (12) avec nervure (13) sur lequel le bouchon de la membrane de sécurité (66) est fixé en l'entourant, et en ayant, s'étendant à partir de la nervure supérieure du réservoir (1), l'enveloppe du filtre sec (5) au centre de laquelle la cavité tubulaire (14) de section circulaire est placée avec un filetage (15) taillé dans l'extrémité libre sur laquelle le raccord cylindrique (16) avec un connecteur (18) du tuyau (4) est fixé, et en ayant, radialement autour de la cavité tubulaire, (14) des ouvertures tubulaires (19) par lesquelles le réservoir central (1) est relié à l'enveloppe du filtre sec (5), et en ayant le filtre sec cylindrique (20) en laine de verre revêtu d'une grille en acier inoxydable et fixé axialement à la cavité (14), de sorte qu'une de ses extrémités est reliée à l'accouplement (16), la partie inférieure de la cuve centrale (1) étant ainsi renforcée (21) de manière intégrée, avec une sortie latérale pour l'évacuation de la solution d'électrolyte (17) et un bouchon fermé (22) de l'évacuation, tandis que par le dessous du renfort (21) une vanne de service (24) est fixée par un filetage (23) dans le palier cylindrique (26) du réservoir (1).

2. Le dispositif modulaire de production d'hydrogène et d'oxygène gazeux, selon la revendication 1, **caractérisé par le fait qu'**il comporte une ou plusieurs paires de piles de cellules (2), placées en série, en parallèle ou de manière combinée au réservoir central (1), fixées à l'aide de vis (9) à travers les ouvertures effectuées circonférentiellement sur la pile (2) et le réservoir central (1), les piles (2) sont constituées d'une série d'électrodes neutres (32) montées en parallèle et insérées entre les électrodes de tension correspondantes (33), placées dans le déflecteur (31), constitué de deux côtés latéraux verticaux (84) reliés entre eux sur le côté inférieur par un connecteur horizontal (85) sur lequel une ouverture circulaire (87) est formée au centre, qui est également un plateau pour le ventilateur (83) qui est fixé à l'électrolyseur (30) au moyen de vis à travers les ouvertures (82), tandis que le déflecteur (31) est fixé à la pile (2) au moyen de vis à travers les ouvertures latérales (97) et les ouvertures (86) sur l'électrode de tension (33), et en ayant des électrodes neutres (32) de section rectangulaire avec des ouvertures circulaires (34) disposées uniformément sur la circonférence et correspondant aux ouvertures (8) sur le réservoir central (1), et en ayant au bord supérieur de chaque électrode neutre (32) des contacts rectangulaires (35) avec des ouvertures centrées (36) sur lesquelles l'alimentation électrique est connectée au moyen de vis, et en ayant à leurs bords latéraux des drains (41) et en ayant entre ces électrodes des joints (37) en plastique, caoutchouc ou silicone, correspondant en forme et en taille aux électrodes neutres (32), et en ayant des vis (9) isolées électriquement avec des revêtements en matériau isolant, et en ayant au sommet des électrodes neutres (32) des ouvertures ellipsoïdales horizontales symétriques (46), et en ayant pour chaque électrode neutre (32) le contact électrique (35) positionné au bord supérieur, et au centre du bord supérieur le contact électrique (40) positionné comme une sortie en « L » avec une ouverture circulaire (39), et en ayant la première et la dernière électrode de la pile (2) d'électrodes de tension (33) sous forme de plaques rectangulaires avec des côtés latéraux orthogonaux (76) sur lesquels des ouvertures circulaires (86) sont formées, à travers lesquelles le déflecteur (31) est fixé au moyen de vis, et au bas de l'électrode de tension (33) il y a une ouverture rectangulaire (77) tandis que tout autour de sa circonférence il y a des ouvertures circulaires (78).

3. Le dispositif modulaire pour la production d'hydrogène et d'oxygène gazeux, selon la revendication 1, **caractérisé par le fait que**, le filtre à eau (6) étant composé d'un masque frontal (55) en forme de parallélépipède creux, dont la face avant est fermée par une grille formée de trois rangées verticales, également espacées, d'ouvertures rectangulaires (56) autour desquelles sont formées circonférentiellement, à des distances mutuelles égales, Le filtre à eau (6) est relié à la pile (2) par des vis (58) et une plaque de mesure (42) est insérée dans le masque frontal (55) et s'étend, à travers le joint (37), dans le réservoir d'eau (59) de forme cubique creuse, bordé d'un cadre à quatre côtés de section rectangulaire et fabriqué de préférence en plastique à haute résistance avec des bords pliés, ajustés et interconnectés, de sorte que sur la face avant, le filtre à eau (6) est relié à la pile (2) par des vis (58), Les ouvertures (61) pour les vis (9) sont disposées régulièrement le long des côtés les plus courts et les plus longs, sur des rebords au moyen desquels les plaques transparentes (43, 44) sont fixées au réservoir (59), entre lesquelles les joints (37) sont insérés, et en ayant une plaque de mesure (42) construite comme une plaque transparente rectangulaire avec un éclairage LED (45) inséré et des champs mats, et en ayant sur la plaque de mesure (42) des marques calibrées gravées pour le minimum (54) et le maximum (62), et en ayant sur la surface horizontale supérieure du réservoir d'eau (59) des ouvertures (70, 71, 72, 73) dans lesquelles sont insérés : un robinet à sens unique (63), une sortie avec bouchon (64), un raccord (65) du tuyau (4) et un bouchon à membrane de sécurité (66), et en ayant au fond du réservoir d'eau (59) une vanne de service (67) et une sortie avec bouchon (68), et en ayant comme prolongement du raccord (65), sur la face inférieure, à travers le réservoir d'eau (59), un tuyau inséré axialement (74).

4. Le dispositif modulaire pour la production d'hydrogène et d'oxygène gazeux, selon la revendication 1, **caractérisé par le fait que** la partie arrière de l'électrolyseur (30) est constituée par l'ensemble d'un réservoir auxiliaire (51) composé d'un support vertical (52) qui, à travers les ouvertures (89), est fixé au moyen de vis au support horizontal (90) dans lequel est d'abord insérée la plaque de mesure arrière (91), à laquelle est fixé par le joint (37) au moyen de vis (9) le corps (92) du réservoir auxiliaire (51), couplé à la face arrière de la pile (2) par le biais du joint (37), et en ayant le support vertical (52) formé comme un corps rectangulaire creux dont le côté orienté vers l'électrolyseur (30) est ouvert, tandis que le côté arrière (93) est fait comme une plaque rectangulaire avec une ouverture rectangulaire verticale étroite (94) et aussi une ouverture rectangulaire étroite (95) sur laquelle une ouverture rectangulaire latérale (96) est prévue, et en ayant le corps (92) du réservoir auxiliaire (51) de la même forme et du même matériau que le corps du réservoir central (1), tandis que la plaque de mesure arrière (91) est faite du même matériau et a des dimensions identiques à celles de la plaque de mesure (42) et porte également des marques gravées pour le minimum et le maximum.

5. Le dispositif modulaire de production d'hydrogène et d'oxygène gazeux, selon la revendication 1, **caractérisé par le fait qu'**il possède un ensemble électronique (3) composé d'une source d'énergie électrique (79) connectée au régulateur de production (98) et à l'électrolyseur (30), dans lequel le régulateur de production (98) est connecté à une base de données (27), à un retour d'information (29) du consommateur (29) et à un panneau de commande (99).

6. Le procédé de production d'hydrogène et d'oxygène gazeux par l'appareil modulaire selon la revendication 5, **caractérisé par le fait que** le régulateur de production (98) modifie la forme et l'intensité du courant électrique fourni à l'électrolyseur (30) sur la base des informations obtenues à partir du retour d'information (29) sur l'efficacité de la combustion et l'émission de gaz d'échappement du consommateur (28).

7. Le procédé de production d'hydrogène et d'oxygène gazeux selon la revendication 6, **caractérisé par le fait que** le régulateur de productivité (98) modifie la forme et l'intensité du courant électrique fourni à l'électrolyseur (30) en fonction des informations provenant de la base de données (27) sur l'efficacité de la combustion et les émissions de gaz d'échappement du consommateur (28).

8. Procédé de production de gaz hydrogène et oxygène, selon la revendication 6 ou 7, **caractérisé par le fait que** le régulateur de productivité (98) stocke les informations reçues via le retour d'information (29) sur l'efficacité de la combustion, les émissions d'échappement et le mode de fonctionnement du consommateur (28), ainsi que les paramètres d'intensité et de forme du courant fourni à l'électrolyseur (30) dans la base de données (27).

9. Le procédé de production d'hydrogène et d'oxygène gazeux, selon les revendications 6 ou 8, **caractérisé par le fait que** l'optimisation du nombre et de la taille des cellules dans les piles (2) est effectuée sur la base des informations obtenues de la base de données (27) pour un consommateur (28) donné.

10. Le procédé de production d'hydrogène et d'oxygène gazeux, selon les revendication 6, **caractérisé par le fait que** le régulateur de productivité (98), dans les cas où la pile est alimentée par un train d'impulsions d'une durée particulière où l'impulsion dure moins de 50 % de la durée, permet l'alimentation alternée de deux piles de cellules (2) ou plus, de sorte que les deux piles sont alimentées en impulsions au cours d'une seule période de temps du train d'impulsions.

11. Le procédé de production d'hydrogène et d'oxygène gazeux, selon les revendications 6 ou 8, **caractérisé en ce que** le régulateur de productivité (98), dans le cas d'une production intermittente d'hydrogène et d'oxygène gazeux, modifie la forme et l'intensité du courant électrique fourni à l'électrolyseur (30) en fonction des informations en retour (29) sur l'efficacité de la combustion et les émissions de gaz d'échappement du consommateur (28) et attribue le mode de fonctionnement au consommateur (28) en fonction des informations obtenues à partir de la base de données (27).
